# EUROPÄISCHE PATENTSCHRIFT

(11) **EP 2 331 361 B1**
(45) Veröffentlichungstag und Bekanntmachung des Hinweises auf die Patenterteilung: **03.05.2017**
(21) Anmeldenummer: 09736185.1
(22) Anmeldetag: 07.10.2009
(51) Int. Cl.: B60K 35/00

(54) **VERFAHREN UND VORRICHTUNG ZUM ANZEIGEN VON INFORMATIONEN, INSBESONDERE IN EINEM FAHRZEUG**
METHOD AND APPARATUS FOR DISPLAYING INFORMATION, IN PARTICULAR IN A VEHICLE
PROCÉDÉ ET DISPOSITIF D'AFFICHAGE D'INFORMATIONS, NOTAMMENT DANS UN VÉHICULE

(30) Priorität: 08.10.2008 DE 102008050803
(43) Veröffentlichungstag der Anmeldung: 15.06.2011
(73) Patentinhaber: Volkswagen Aktiengesellschaft, 38440 Wolfsburg (DE)
(72) Erfinder: MEYER, Oliver, Berlin 10629 (DE); WILD, Holger, Berlin 12435 (DE)
(74) Vertreter: Reitstötter Kinzebach
(86) Internationale Anmeldenummer: PCT/EP2009/063041
(87) Internationale Veröffentlichungsnummer: WO 2010/040782

(56) Entgegenhaltungen:
- EP-A2- 1 081 644
- DE-A1-102005 017 313
- US-A- 5 339 390
- US-A- 5 754 809
- US-A- 5 995 104
- US-A1- 2007 157 126

## Beschreibung

Die vorliegende Erfindung betrifft ein Verfahren zum Anzeigen von Informationen, insbesondere in einem Fahrzeug, bei dem zumindest ein Objekt zur Wiedergabe einer Teilmenge einer Gesamtinformation in zumindest einer ersten Darstellungsart mittels eines Displays, das z. B. in dem Fahrzeug befestigt ist, graphisch dargestellt wird und in Abhängigkeit von einem Steuersignal von einer Steuereinrichtung Graphikdaten erzeugt werden, welche die Darstellung des graphischen Objekts so verändern, dass das graphische Objekt in zumindest eine zweite Darstellungsart übergeht. Ferner betrifft die Erfindung eine Anzeigeeinrichtung, insbesondere für ein Fahrzeug, mit einem Display zur graphischen Darstellung von Informationen, das z. B. in dem Fahrzeug befestigt ist, einem Speicher zum Speichern einer Gesamtinformation, einer Steuereinrichtung, mit welcher Graphikdaten erzeugbar sind, die zumindest ein auf dem Display darstellbares graphisches Objekt in einer ersten Darstellungsart wiedergeben, bei welcher eine Teilmenge der in dem Speicher gespeicherten Gesamtinformation dargestellt wird, und einer Eingabeeinrichtung zum Erzeugen eines Steuersignals durch einen Bedienvorgang zum Verändern der angezeigten Teilmenge der Gesamtinformation.

In einem Fahrzeug werden herkömmlicherweise verschiedene Informationen angezeigt, die insbesondere betriebsbezogene Daten des Fahrzeugs für den Fahrer visuell darstellen. Des Weiteren können in dem Fahrzeug für den Fahrer verkehrsbezogene Daten dargestellt werden. Für die Anzeige dieser Informationen wurden früher analoge mechanische Anzeigeinstrumente verwendet. Diese waren insbesondere innerhalb des so genannten Kombiinstruments in der Nähe des primären Sichtfelds des Fahrers hinter dem Lenkrad angeordnet. Das Kombiinstrument dient insbesondere der Anzeige der Geschwindigkeit, des Tankinhalts, der Kühlertemperatur und anderer betriebsbezogener Informationen des Fahrzeugs.

Mit der Zunahme elektronischer Einrichtungen im Fahrzeug wurde es erforderlich, eine größere Informationsmenge im Fahrzeug darzustellen. Moderne Fahrzeuge umfassen beispielsweise eine Vielzahl von Fahrerassistenzsystemen, deren Informationen im Fahrzeug angezeigt werden müssen. Des Weiteren umfassen Fahrzeuge vielfach ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Aus diesem Grund werden in Fahrzeugen vielfach Multifunktionsbediensysteme eingesetzt, welche eine oder mehrere Multifunktionsanzeige(n) und Bedienelemente umfassen, mit denen die vielfältigen im Fahrzeug enthaltenen Einrichtungen bedient werden können. Die Bedienung wird dabei durch die auf der Multifunktionsanzeige wiedergegebene Information unterstützt bzw. geführt. Ferner kann über das Bediensystem ausgewählt werden, welche Informationen auf der Multifunktionsanzeige angezeigt werden sollen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Die Multifunktionsanzeigen werden in Verbindung mit einem Bediensystem betrieben, welches verschiedene Bedienelemente umfassen kann. In der DE 199 41 956 A1 sind z. B. mehrere Auswahl- und Funktionstasten zur Ansteuerung der Fahrzeugeinrichtungen vorgesehen. In der DE 199 41 960 A1 ist andererseits ein Multifunktionsbedienelement zur Auswahl von Funktionsgruppen und individuellen Funktionen beschrieben, das einen bidirektional drehbaren Zylinder umfasst, der ferner senkrecht zur Rotationsachse bewegbar ist.

Des Weiteren ist aus der EP 0 366 132 B1 eine Multifunktionsbedieneinrichtung bekannt, bei der die Auswahl von Funktionsgruppen und die Auswahl individueller Funktionen mittels eines Drehdrückschalters erfolgt, bei dem der Schalter in Richtung der Drehachse betätigbar ist. Aus der DE 199 44 324 ist eine Multifunktionsbedienvorrichtung bekannt, die einen Drehschalter zur Auswahl von Funktionen aufweist, die innerhalb eines Anzeigefeldes eines Displays darstellbar sind. Um den Drehschalter herum sind Druckschalter angeordnet, denen ebenfalls Anzeigefelder des Displays zugeordnet sind. Schließlich ist aus der DE 103 24 579 A1 eine Bedienvorrichtung zur Steuerung von Fahrzeugeinrichtungen bekannt, die ein berührungsempfindliches Bedienfeld aufweist.

Neben den vorstehend beschriebenen abgesetzten Bedienelementen wurde ferner vorgeschlagen, das Display selbst mit einer berührungsempfindlichen Oberfläche auszustatten und auf diese Weise einen so genannten Touchscreen zur Verfügung zu stellen. Bei einem solchen Touchscreen erfolgt die Bedienung dadurch, dass der Nutzer z. B. mit seiner Fingerspitze den Touchscreen berührt. Die Position der Berührung wird erfasst, ausgewertet und einem Bedienschritt zugeordnet. Um den Nutzer bei der Bedienung zu unterstützen, können auf dem Display virtuelle Schalter als graphische Schaltflächen dargestellt werden. Eine Anzeigevorrichtung mit einer berührungsempfindlichen Oberfläche, die in Verbindung mit einem Navigationssystem eingesetzt wird, ist beispielsweise in der DE 10 2005 020 155 A1 beschrieben.

Der nächstliegend bekanntgewordene Stand der Technik
ist der US20070157126 zu entnehmen.
Für die Anzeige von Information in einem Fahrzeug und für die Bedienung der vielfältigen Einrichtungen des Fahrzeugs ergeben sich sehr spezielle Anforderungen. Die Informationsaufnahme und die Bedienung erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Gleichermaßen sollte die Bedienung der Fahrzeugeinrichtungen so einfach und intuitiv wie möglich durchführbar sein, so dass der Fahrer die Einrichtungen auch während der Fahrt bedienen kann. Wird die Bedienung von einer Anzeige unterstützt oder geführt, sollte die Anzeige so erfolgen, dass der Fahrer für die Bedienung nur sehr kurz die Anzeige betrachten muss, um die Bedienung durchzuführen.

Die Darstellung von Information in einem Fahrzeug erfolgt vielfach dadurch, dass eine Teilmenge einer Gesamtinformation auf der Anzeigefläche in dem Fahrzeug angezeigt wird und der Nutzer die Teilmenge verändern kann. Die Gesamtinformation kann beispielsweise eine Liste mit einer Vielzahl von Listeneinträgen betreffen. Von der Gesamtliste wird eine Teilmenge der Listeneinträge angezeigt. Durch einen Bedienvorgang kann der Nutzer einen Bildlauf (Scrollen) hervorrufen, um andere Listeneinträge zur Anzeige zu bringen. Bei dem Bedienvorgang kann der Nutzer beispielsweise eine Bedienbewegung einer bestimmten Länge ausführen. Ferner kann der Nutzer beispielsweise ein Bedienelement für eine bestimmte Bediendauer betätigen. Die Größe bzw. das Maß der Veränderung der angezeigten Information, d. h. in diesem Fall die Anzahl der Positionen, um die sich die Listeneinträge, die angezeigt werden, verändern, hängt in diesem Fall von der Länge der Bedienbewegung bzw. der Bediendauer ab.
Umfasst die Gesamtinformation eine sehr große Datenmenge, wie z. B. eine sehr lange Liste mit vielen Listeneinträgen oder eine geographische Karte, ergibt sich das Problem, dass der Bedienvorgang für einen Bildlauf zu sehr entfernt liegenden Listeneinträgen oder Bereichen der Karte ein hohes Maß an Zeit und Aufmerksamkeit vom Nutzer abverlangt. Dies ist jedoch, wie vorstehend erläutert, bei der Anwendung in einem Fahrzeug nachteilig.
Es ist daher die Aufgabe der vorliegenden Erfindung, ein Verfahren und eine Vorrichtung der eingangs genannten Art bereitzustellen, mit denen auf einfache und für den Nutzer intuitive Weise eine Veränderung der angezeigten Teilmenge der Gesamtinformation so erfolgen kann, dass der hierfür erforderliche Bedienvorgang so schnell wie möglich durchgeführt werden kann und vom Nutzer ein möglichst geringes Maß an Aufmerksamkeit abverlangt.
Diese Aufgabe wird erfindungsgemäß durch ein Verfahren mit den Merkmalen des Anspruchs 1 und eine Anzeigeeinrichtung mit den Merkmalen des Anspruchs 11 gelöst. Vorteilhafte Aus- und Weiterbildungen ergeben sich aus den Unteransprüchen.
Das erfindungsgemäße Verfahren ist dadurch gekennzeichnet, dass bei der zweiten Darstellungsart das Objekt perspektivisch oder dreidimensional relativ zur ersten Darstellungsart des Objekts um eine Achse geschwenkt gezeigt wird, so dass sich zwar gegebenenfalls die von dem Objekt eingenommene Fläche auf dem Display verkleinert, die Teile des Objekts, die perspektivisch hinten dargestellt werden, sich jedoch hinsichtlich ihrer absoluten Größe auf dem Display verkleinern, und dass die bei der zweiten Darstellungsart von dem Objekt wiedergegebene Teilmenge der Gesamtinformation größer ist als die bei der ersten Darstellungsart von dem Objekt wiedergegebene Teilmenge der Gesamtinformation.

Bei dem erfindungsgemäßen Verfahren führt das perspektivische oder dreidimensionale Schwenken des graphischen Objekts somit dazu, dass ein größerer Anteil der Gesamtinformation von dem Objekt dargestellt wird. Hierdurch erhält ein Nutzer eine große Vorschau auf einen Teil der Gesamtinformation, welcher in der ersten Darstellungsart nicht dargestellt wird. Eine solche große Vorschau ist insbesondere dann von Vorteil, wenn der Nutzer die wiedergegebene Teilmenge der Gesamtinformation verändern will.

Bei dem graphischen Objekt kann es sich beispielsweise um ein flächiges Objekt handeln, das z. B. in der ersten Darstellungsart in einer Aufsicht gezeigt wird. In diesem Fall kann das graphische Objekt das Display oder einen Teilbereich des Displays vollständig ausfüllen. Beim Übergang von der ersten Darstellungsart in die zweite Darstellungsart wird das Objekt z. B. perspektivisch geschwenkt, so dass sich zwar gegebenenfalls die von dem Objekt eingenommene Fläche auf dem Display verkleinert, die Teile des Objekts, die perspektivisch hinten dargestellt werden, verkleinern sich jedoch hinsichtlich ihrer absoluten Größe auf dem Display, so dass insgesamt eine größere Teilmenge der Gesamtinformation so wiedergegeben wird, dass sie schnell und intuitiv vom Betrachter erfasst werden kann. In Analogie zu einem realen Objekt, wie z. B. einer Karte von der Größe des Displays, ist es nämlich möglich, durch einen Ausschnitt der Größe des Displays aufgrund der perspektivischen Darstellung eine größere Karte zu betrachten, wenn diese um eine Achse nach hinten weggeschwenkt ist. Auf dieser größeren Karte kann man somit auch eine größere Teilmenge der Gesamtinformation unterbringen, welche durch den Ausschnitt des Displays betrachtet werden kann.

Das dreidimensionale Schwenken des Objekts kann autostereoskopisch angezeigt werden. In diesem Fall sieht im Unterschied zur perspektivischen Darstellung das eine Auge des Betrachters ein geringfügig anderes Bild als das andere Auge, so dass eine reale dreidimensionale Darstellung erreicht wird. Bei einer autostereoskopischen Anzeige sind dabei keine speziellen Vorrichtungen, wie z. B. Brillen oder dergleichen, nötig, um den dreidimensionalen Effekt beim Betrachten der Anzeige hervorzurufen.

Gemäß einer Ausgestaltung des erfindungsgemäßen Verfahrens wird das graphische Objekt um eine vertikale oder horizontale Achse geschwenkt, die insbesondere mit einer Seitenkante des graphischen Objekts in der ersten Darstellungsart zusammenfallen kann. Die vertikale oder horizontale Achse kann ferner durch einen seitlich äußersten Punkt des graphischen Objekts gehen. Der maximale Schwenkwinkel ist insbesondere in einem Bereich von 35° bis 55°. Wird der maximale Schwenkwinkel nämlich zu groß, dann ist die Projektion eines perspektivisch dargestellten Objekts auf die Displayfläche zu klein, um die wiedergegebene Teilmenge der Gesamtinformation noch erkennen zu können.

Gemäß einer weiteren Ausgestaltung des erfindungsgemäßen Verfahrens ist die Teilmenge der ersten Darstellungsart eine Teilmenge der zweiten Darstellungsart, d. h. beim Übergang von der ersten Darstellungsart in die zweite Darstellungsart wird die wiedergegebene Informationsmenge vergrößert.

Gemäß einer weiteren Ausgestaltung des erfindungsgemäßen Verfahrens verändert die Steuereinrichtung die Graphikdaten so, dass die Teilmenge bei der zweiten Darstellungsart perspektivisch oder dreidimensional dargestellt wird, wobei die Art der perspektivischen oder dreidimensionalen Darstellung von dem Schwenkwinkel abhängt. Es wird somit nicht nur das graphische Objekt perspektivisch oder dreidimensional dargestellt, sondern auch die von dem Objekt wiedergegebene Information in Analogie zum Schwenken eines realen flächigen Objekts, auf welchem die Information aufgedruckt ist. Die Größe der von dem graphischen Objekt wiedergegebene Teilmenge hängt dabei insbesondere von dem Schwenkwinkel ab, mit dem das graphische Objekt geschwenkt ist. Der Begriff *Größe* bezieht sich dabei auf die Informationsmenge und nicht auf die geometrische Größe bei der Anzeige.

Gemäß einer weiteren Ausgestaltung des erfindungsgemäßen Verfahrens verändert die Steuereinrichtung die Graphikdaten so, dass bei der zweiten Darstellungsart die perspektivisch oder dreidimensional vorne angezeigte Information mit einer größeren Detailtiefe wiedergegeben wird als die perspektivisch oder dreidimensional hinten angezeigte Information. Diese Art der Darstellung ist insbesondere vorteilhaft, wenn die wiedergegebene Information eine hierarchische Struktur aufweist. In diesem Fall kann die perspektivisch oder dreidimensional vorne angezeigte Information zu einer höheren Hierarchieebene gehören als die perspektivisch oder dreidimensional hinten angezeigte Information.

Das Steuersignal wird bei dem erfindungsgemäßen Verfahren insbesondere durch einen Bedienvorgang eines Nutzers erzeugt. Erfindungsgemäß wird durch diesen Bedienvorgang ferner die angezeigte Teilmenge der Gesamtinformation verändert. Durch das vom Nutzer erzeugte Steuersignal werden somit zwei Vorgänge ausgelöst: Zum einen wird das graphische Objekt von der ersten Darstellungsart in die zweite Darstellungsart überführt, bei welcher das Objekt perspektivisch oder dreidimensional geschwenkt gezeigt wird und bei welcher eine größere Teilmenge der Gesamtinformation angezeigt wird. Zum anderen kann durch den Bedienvorgang die angezeigte Teilmenge der Gesamtinformation verändert werden. Da dem Nutzer jedoch in der zweiten Darstellungsart eine größere Teilmenge angezeigt wird, erlaubt ihm diese Darstellungsart eine weitere Vorschau, so dass er durch den Bedienvorgang die angezeigte Teilmenge der Gesamtinformation schneller verändern kann, um zu der gewünschten Teilmenge zu gelangen. Hierdurch wird der Bedienvorgang zum Verändern der angezeigten Teilmenge verkürzt. Wenn der Bedienvorgang vom Fahrer des Fahrzeugs ausgeführt wird, liefert das erfindungsgemäße Verfahren somit einen Beitrag zum sicheren Führen des Fahrzeugs, da der Bedienvorgang zu einer geringeren Ablenkung des Fahrers führt.

Gemäß einer Ausgestaltung des erfindungsgemäßen Verfahrens ist die Gesamtinformation eine Liste mit einer Vielzahl von Listeneinträgen, von denen nur eine Teilmenge angezeigt wird. Die Anzahl der Listeneinträge der Teilmenge hängt vom Schwenkwinkel ab. In der ersten Darstellungsart werden weniger Listeneinträge angezeigt als in der zweiten Darstellungsart. Der Übergang von der ersten Darstellungsart in die zweite Darstellungsart gibt dem Nutzer somit eine große Vorschau auf weitere Listeneinträge. Die Veränderung der angezeigten Teilmenge der Gesamtinformation entspricht in diesem Fall einem Bildlauf bzw. einem Scrollen durch die Liste. Für den Bedienvorgang des Bildlaufs durch die Liste wird die Liste somit auf dem perspektivisch oder dreidimensional geschwenkten Objekt dargestellt, bei dem eine größere Anzahl von Listeneinträgen wiedergegeben sind. Der Nutzer kann auf diese Weise schneller durch die Liste scrollen.

Gemäß einer weiteren Ausgestaltung des erfindungsgemäßen Verfahrens stellt die Gesamtinformation eine geographische Karte dar, von der nur ein Teilbereich angezeigt wird, wobei der Kartenausschnitt vom Schwenkwinkel abhängt. Eine derartige Darstellung einer geographischen Karte erfolgt insbesondere in Verbindung mit einem Navigationssystem des Fahrzeugs. Der Nutzer kann nun durch den Bedienvorgang den Kartenausschnitt verändern. Hierbei wird - bildlich ausgedrückt - der angezeigte Teilbereich über die Gesamtkarte bewegt. Um bei einem größeren Schwenkwinkel einen größeren Kartenausschnitt anzeigen zu können, kann bei der Kartendarstellung in perspektivisch oder dreidimensional weiter vorne gelegenen Bereichen des Objekts ein größerer Kartenmaßstab verwendet werden als bei weiter hinten gelegenen Bereichen. Auch in diesem Fall ist somit die Detailtiefe in vorne gelegenen Bereichen des Objekts größer als in hinten gelegenen Bereichen. Da der Kartenmaßstab in weiter hinten gelegenen Bereichen des Objekts jedoch kleiner ist, ist der wiedergegebene Kartenausschnitt insgesamt größer, so dass der Nutzer eine Vorschau auf entfernt gelegene Bereiche der Karte erhält. In diesem Fall wird die Schwenkachse bevorzugt so gewählt, dass das Objekt perspektivisch oder dreidimensional in die Richtung nach hinten geschwenkt wird, in welche der Nutzer den Kartenausschnitt verschieben will. Diese Verschieberichtung wird durch den Bedienvorgang bestimmt.

Gemäß einer weiteren Ausgestaltung des erfindungsgemäßen Verfahrens wird bei Beendigung des Bedienvorgangs der Schwenkwinkel wieder auf den ursprünglichen Wert zurückgesetzt, bei dem das graphische Objekt die Teilmenge der Gesamtinformation in der ersten Darstellungsart wiedergibt. Es ist somit bei dem erfindungsgemäßen Verfahren möglich, für den Bedienvorgang eine größere Teilmenge der Gesamtinformation darzustellen, um die Dauer des Bedienvorgangs auf Grund der größeren Vorschau für eine Veränderung der Teilmenge zu verkürzen.

Für den Bedienvorgang kann beispielsweise eine Oberfläche des Displays oder eine Oberfläche einer Eingabeeinrichtung berührungsempfindlich sein. In diesem Fall wird beim Bedienvorgang die berührungsempfindliche Oberfläche betätigt. Die Anzeigefläche ist somit Teil eines Touchscreens oder die Oberfläche der Eingabeeinrichtung Teil eines Touchpads. Der Bedienvorgang wird dadurch ausgeführt, dass der Nutzer beispielsweise mit seiner Fingerspitze die berührungsempfindliche Oberfläche des Displays oder der Eingabeeinrichtung bei einer bestimmten Position berührt bzw. eine bestimmte Bewegung auf der berührungsempfindlichen Oberfläche ausführt. Der Bedienvorgang zum Verändern der Teilmenge der Gesamtinformation kann insbesondere eine auf der berührungsempfindlichen Oberfläche ausgeführter Geste, insbesondere eine Wischgeste sein.

Gemäß einer anderen Ausgestaltung des erfindungsgemäßen Verfahrens wird die Position eines Objekts, insbesondere die Hand oder der Finger eines Nutzers, in einem bestimmten Bereich vor dem Display detektiert. Aus der zeitlichen Entwicklung dieser Position lässt sich die Bewegung des Objekts ableiten, so dass bestimmte, vom Nutzer mit der Hand ausgeführte Gesten, erfasst werden können und in ein entsprechendes Steuersignal umgewandelt werden können.

Schließlich kann bei dem Bedienvorgang auch ein mechanisches Bedienelement betätigt werden.

Bei dem Bedienvorgang kann beispielsweise eine Bedienbewegung ausgeführt werden, deren Geschwindigkeit erfasst wird. Der Schwenkwinkel kann in diesem Fall von der Geschwindigkeit der Bedienbewegung abhängen. Je schneller die Bedienbewegung ausgeführt wird, desto größer ist der Schwenkwinkel. Des Weiteren kann auch die Geschwindigkeit der Veränderung der angezeigten Teilmenge der Gesamtinformation von der Geschwindigkeit der Bedienbewegung abhängen. Wird beispielsweise durch eine Liste gescrollt, führt eine schnelle Bedienbewegung zu einem schnellen Scrollen in der Liste und eine langsame Bedienbewegung zu einem langsamen Scrollen in der Liste.

Des Weiteren kann für den Bedienvorgang eine Bediendauer definiert werden, die erfasst wird. Der Schwenkwinkel und/oder die Geschwindigkeit der Veränderung der angezeigten Teilmenge der Gesamtinformation hängt in diesem Fall von der Bediendauer ab. Die Bediendauer kann beispielsweise so definiert sein, dass die Berührung des Touchscreens oder des Touchpads bei einer bestimmten Position erfasst wird. Ferner kann sich die Bediendauer aus dem fortwährenden Drücken oder Betätigen eines Bedienelements ergeben. Falls die Bediendauer sehr lange ist, ist der Schwenkwinkel größer und die Geschwindigkeit der Veränderung der angezeigten Teilmenge der Gesamtinformation höher.

Gemäß einer weiteren Ausgestaltung des erfindungsgemäßen Verfahrens wird bei dem Bedienvorgang eine vom Nutzer ausgeübte Kraft detektiert. In diesem Fall hängt der Schwenkwinkel und/oder die Geschwindigkeit der angezeigten Teilmenge der Gesamtinformation von der beim Bedienvorgang vom Nutzer ausgeübten Kraft ab. Je größer die Kraft ist, desto größer ist der Schwenkwinkel und desto höher die Geschwindigkeit der Veränderung der angezeigten Teilmenge. Es kann beispielsweise die Kraft detektiert werden, die bei der Berührung des Touchscreens oder des Touchpads ausgeübt wird. Ferner kann die Kraft detektiert werden, die bei der Betätigung eines mechanischen Bedienelements vom Nutzer auf dieses Element ausgeübt wird.

Die erfindungsgemäße Anzeigeeinrichtung ist dadurch gekennzeichnet, dass von der Steuereinrichtung die Graphikdaten so veränderbar sind, dass das graphische Objekt in zumindest eine zweite Darstellungsart übergeht, bei der das Objekt perspektivisch oder dreidimensional relativ zur ersten Darstellungsart des Objekts um eine Achse geschwenkt gezeigt ist und die von dem Objekt wiedergegebene Teilmenge der Gesamtinformation größer ist als die bei der ersten Darstellungsart von dem Objekt wiedergegebene Teilmenge der Gesamtinformation.

Die erfindungsgemäße Vorrichtung ist insbesondere so ausgestaltet, dass sie die vorstehend beschriebenen Verfahrensschritte teilweise oder vollständig ausführen kann.

Gemäß einer Ausgestaltung der erfindungsgemäßen Anzeigeeinrichtung ist die Gesamtinformation eine Liste mit einer Vielzahl von Listeneinträgen, von denen nur eine Teilmenge anzeigbar ist. In diesem Fall ist die Anzahl der Listeneinträge der Teilmenge von dem Schwenkwinkel abhängig. Ferner kann die Gesamtinformation eine geographische Karte darstellen, von der nur ein Teilbereich anzeigbar ist. In diesem Fall hängt der Kartenausschnitt vom Schwenkwinkel ab.

Der Bedienvorgang umfasst insbesondere die vorstehend mit Bezug zu dem erfindungsgemäßen Verfahren beschriebenen Bedienvorgänge. Hierfür umfasst die Eingabeeinrichtung beispielsweise eine berührungsempfindliche Oberfläche. Diese Oberfläche kann Teil eines sogenannten Touchpads sein. Ferner kann die Oberfläche auf dem Display ausgebildet sein, d. h. das Display ist ein Touchscreen. Das Touchpad oder der Touchscreen kann insbesondere als Multi-Touchpad/-Touchscreen ausgebildet sein, d. h. mit der berührungsempfindlichen Oberfläche ist die gleichzeitige Berührung bei verschiedenen Bereichen detektierbar. Die Größe des Bereichs kann sich dabei beispielsweise nach der Größe des Bereichs richten, welcher von der Berührung der Fingerspitze eines Nutzers eingenommen wird.

Ferner kann die Eingabeeinrichtung ein mechanisches Bedienelement umfassen. Dieses Bedienelement ist z. B. ein mechanischer Drehsteller, ein Bedienelement, welches in zwei Dimensionen betätigbar ist, oder ein Joystick, um die angezeigte Teilmenge in verschiedenen Richtungen auf der Anzeigefläche zu verschieben.

Die Eingabeeinrichtung kann ferner einen Sensor zum Erfassen der Betätigungsgeschwindigkeit des mechanischen Bedienelements, zum Erfassen der Dauer der Berührung des mechanischen Bedienelements und/oder zum Erfassen des Loslassens des mechanischen Bedienelements umfassen. Beispielsweise kann die Eingabeeinrichtung eine infrarotbasierte oder kapazitive Berührungssensorik umfassen.

Die Eingabeeinrichtung kann ferner eine drucksensitive Oberfläche umfassen, mit welcher die bei der Betätigung der Eingabeeinrichtung ausgeübte Kraft detektierbar ist. Die Kraft kann beispielsweise resistiv oder kapazitiv detektiert werden. Gemäß einer Ausgestaltung der erfindungsgemäßen Anzeigeeinrichtung ist die drucksensitive Oberfläche auf einem Touchscreen oder einem Touchpad ausgebildet, so dass die Kraft ortsaufgelöst detektiert werden kann, d.h. es kann detektiert werden, an welcher Stelle und gegebenenfalls auf welcher Fläche die Kraft auf die berührungsempfindliche Oberfläche ausgeübt wird.

Schließlich kann die Eingabeeinrichtung eine Einrichtung zum Erfassen der Position eines Objekts innerhalb des Fahrzeugs umfassen. Die Position dieses Objekts ist insbesondere vor dem Display. Bei dem Objekt kann es sich z. B. um die Hand eines Benutzers handeln. Die Eingabe kann somit dadurch erfolgen, dass die Hand des Benutzers in bestimmte Positionen vor dem Display gebracht wird.

Gemäß einer weiteren Ausgestaltung der erfindungsgemäßen Anzeigeeinrichtung kann die Eingabeeinrichtung ferner eine Einrichtung zum Detektieren der Position eines Objekts, insbesondere der Hand eines Nutzers, in einem Bereich vor dem Display umfassen.

Gemäß einer weiteren Ausgestaltung der erfindungsgemäßen Anzeigeeinrichtung kann das Display eine autostereoskopische Anzeige erzeugen. Hierfür ist das Display z. B. mit einer Maske für die Trennung verschiedener Zwischenbilder versehen.

Die Maske ist beispielsweise eine wellenlängenselektive Filtermaske. Dieser Filter gibt die Lichtausbreitungsrichtungen der einzelnen Subpixel des Displays durch Abdecken bzw. Filtern vor. Einzelne Farbwerte der Pixel werden in verschiedenen Winkeln in den Raum abgestrahlt. Auf diese Weise lassen sich für die beiden Augen des Betrachters separate Bilder erzeugen, die beim Betrachter zu einem dreidimensionalen Bild zusammengesetzt werden. Dabei zeigt das Bild für das eine Auge eine leicht versetzte Betrachtungsposition relativ zu dem Bild, das für das andere Auge bestimmt ist. Vorzugsweise sind mindestens acht autostereoskopische Ansichten gleichzeitig darstellbar, wobei die Ansichten in einen horizontalen Sichtfächer abstrahlbar sind. Es können vorzugsweise mehrere stereoskopische Sichtfächer nebeneinander erzeugt werden und eine Sichtzone bilden. Bevorzugt sind in dem Sichtfächer insgesamt sechs bis acht nebeneinander liegende autostereoskopische Ansichten enthalten. Der horizontale Öffnungswinkel des Sichtfächers oder der Sichtfächer, in dem/denen eine autostereoskopische Darstellung erfolgt, ist vorzugsweise größer 15° und insbesondere zwischen 25 und 30°. Besonders bevorzugt ist ein Öffnungswinkel von 27°. Auf diese Weise können für den Betrachter mehrere Ansichten bei verschiedenen Betrachtungswinkeln erzeugt werden, bei denen jeweils korrekt Bildpaare für die Zusammensetzung zu einem dreidimensionalen Bild bei den jeweiligen Winkeln abgestrahlt werden. Dies hat zur Folge, dass man nahe am Display zwei Ansichten sieht, die weiter voneinander entfernt sind. Geht man weiter weg, dann verbreitern sich auch die Teilansichten und die Augen sehen näher benachbarte Ansichten. Die Zahl der Ansichten hängt von der Größe des Displays ab. Bei kleineren Displays, deren Diagonale 4 Zoll ist, haben sich insbesondere acht Ansichten als günstig erwiesen. Bei größeren Displays sind auch 16 oder 24 Ansichten möglich.

Die Erfindung wird nun an Hand eines Ausführungsbeispiels mit Bezug zu den Zeichnungen erläutert.

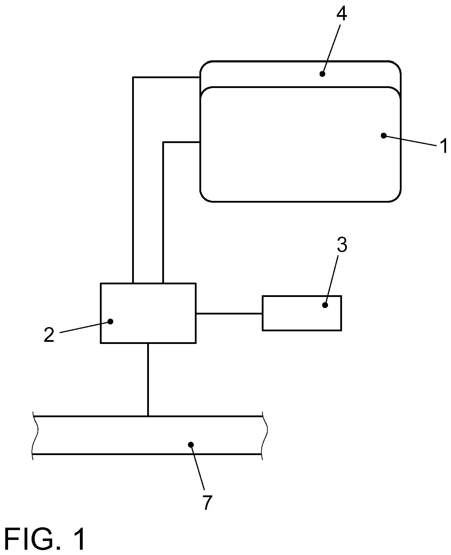

- Figur 1: zeigt schematisch ein Ausführungsbeispiel der erfindungsgemäßen Anzeigeeinrichtung und die Verbindung dieser Anzeigeeinrichtung mit anderen Einrichtungen des Fahrzeugs und
- die Figuren 2 und 3: zeigen von einem Ausführungsbeispiel des erfindungsgemäßen Verfahrens erzeugte Anzeigen des Displays, bei denen das graphische Objekt geschwenkt wird.

Die Anzeigeeinrichtung umfasst ein Display 1 zur grafischen Darstellung von Informationen. Bei dem Display 1 kann es sich um ein Matrix-Display handeln, z. B. ein LCD (liquid crystal display), insbesondere ein Farbdisplay in TFT-(thin-film transistor)-Technik. Des Weiteren kann das Display in ein so genanntes twisted nematic-liquid crystal display (TN-LCD), ein super twisted nematic (STN) display, ein Doppelschicht-STN, ein FLC-(ferroelectric liquid crystal)-Display oder ein SSFLC (surface stabilized ferroelectric liquid crystal) sein. Dem Display 1 ist eine (nicht gezeigte) Hintergrundbeleuchtung zugeordnet, die durch eine oder mehrere Licht emittierende Dioden bereitgestellt werden kann. Das Display 1 ist frei programmierbar, d. h. es lassen sich beliebige Graphikdaten erzeugen, welche auf dem Display 1 dargestellt werden.

Optional kann vor dem Display 1 ist eine Maske angeordnet sein, um eine autostereoskopische Anzeige zu ermöglichen. Bei der Maske handelt es sich insbesondere um eine wellenlängenselektive Filtermaske bzw. eine optische Strukturmaske. Die Maske ermöglicht es, zwischen Teilbildern, die zu verschiedenen Ansichten gehören, zu unterscheiden und jede Ansicht in eine andere Richtung abzustrahlen. Es können somit Teilbilder für das rechte und für das linke Auge eines Betrachters getrennt werden. Beim Betrachten der Anzeigevorrichtung können die Teilbilder zu einer dreidimensionalen Ansicht zusammengesetzt werden. Hierfür sind keine weiteren Hilfsmittel wie Brillen oder dergleichen erforderlich. Hinsichtlich weiterer Details der Anzeigevorrichtung wird auf die DE 103 09 194 A1 und die DE 103 20 530 A1 verwiesen.

Die Trennung der Teilbilder für das dreidimensionale Bild ist nur in einem bestimmten Raumwinkel möglich. Bewegt der Betrachter sich beispielsweise in einer horizontalen Ebene zur Seite, wird die Trennung der Teilbilder aufgehoben und die Darstellung wird zweidimensional. Um möglichst viele Bildpaare für eine korrekte dreidimensionale Darstellung im Raum zu erzeugen, werden für ein Anzeigebild mehrere Ansichten dargestellt. Die Teilbilder dieser verschiedenen Ansichten werden in etwa fächerförmig horizontal abgestrahlt, so dass sich der horizontale Sichtfächer bildet. Der Öffnungswinkel eines Sichtfächers beträgt z. B. 27°. Es hat sich herausgestellt, dass acht Ansichten bei einem 4 Zoll großen Display 1 besonders bevorzugt sind. In diesem Fall sind die Helligkeit, Auflösung und die räumliche Wiedergabe ausreichend. Die Auflösung des Displays 1 ist in diesem Fall größer 150 dpi.

Das Display 1 ist insbesondere in einem Bereich des Fahrzeugs befestigt, der zumindest für den Fahrer gut sichtbar ist. Ist die Bedienung der Einrichtungen des Fahrzeugs direkt mit der Anordnung des Displays gekoppelt, so dass der Benutzer z. B. seine Hand oder seinen Finger zumindest in die Nähe des Displays 1 bringen muss, um Eingaben vorzunehmen, ist das Display 1 so angeordnet, dass es der Fahrer des Fahrzeugs leicht mit seiner Hand oder seinem Finger erreichen kann. Beispielsweise kann das Display 1 in der Mittelkonsole des Fahrzeugs untergebracht sein.

Das Display 1 ist mit einer Steuereinrichtung 2 verbunden, mit welcher Graphikdaten für auf dem Display 1 darstellbare grafische Objekte erzeugbar sind. Ferner ist die Steuereinrichtung 2 mit einer Eingabeeinrichtung 4 verbunden, über welche der Benutzer Einrichtungen des Fahrzeugs, deren Informationen auf dem Display 1 angezeigt werden, sowie die Informationsanzeige auf dem Display 1 steuern kann.

Bei der Eingabeeinrichtung 4 kann es sich beispielsweise um eine Einrichtung zum Erfassen und Auswerten einer Geste eines Körperteils eines Nutzers handeln. Beispielsweise kann die Hand des Benutzers vor dem Display 1 die Geste ausführen. Dabei wird die dreidimensionale Position der Hand in einem bestimmten Aufenthaltsbereich vor dem Display 1 erfasst, ohne dass es erforderlich ist, dass das Display 1 berührt wird. Der zugelassene Aufenthaltsbereich hängt von der Anordnung des Displays 1 in dem Fahrzeug ab. Der Bereich sollte so gewählt sein, dass der Aufenthalt der Hand eines Benutzers, in diesem Aufenthaltsbereich eindeutig mit einer Bedienung der Eingabeeinrichtung 4 in Verbindung gebracht werden kann. Die Grenze des Aufenthaltsbereichs kann z. B. 40 cm bis 10 cm vor dem Display 1 liegen. Wird die Hand des Benutzers näher als dieser Schwellwert an das Display 1 heranbewegt, wird dies von der Eingabeeinrichtung 4 erkannt und die Annäherung wird als Bedienabsicht interpretiert. Dies kann als Eingabe interpretiert werden, welche zu einer Schwenkung des graphischen Objekts führt, wie es später im Detail erläutert wird. Die Eingabeeinrichtung 4 detektiert die Position und die Bewegung der Hand des Benutzers in dem Aufenthaltsbereich. Dabei werden verschiedene, von der Hand ausgeführte Gesten erkannt und als Eingaben interpretiert.

Die Eingabeeinrichtung 4 kann z. B. Infrarotlichtquellen und Infrarotlichtempfänger umfassen, welche das an der Hand reflektierte Infrarotlicht detektieren. Details einer solchen Eingabeeinrichtung sind in der DE 100 58 244 C2 beschrieben, deren diesbezüglicher Offenbarungsgehalt hiermit in die vorliegende Beschreibung aufgenommen wird. Weitere Eingabeeinrichtungen, die in Verbindung mit der Anzeigeeinrichtung eingesetzt werden können, sind in folgenden Veröffentlichungen beschrieben: DE 103 05 341 A1 und DE 10 2004 048 956 A1.

Des Weiteren kann die Position der Hand und deren zeitliche Veränderung auch mittels eines optischen Systems erfasst werden. Bei diesem System emittiert eine Licht emittierende Diode z. B. rechteckförmiges amplitudenmoduliertes Licht. Dieses Licht wird an dem zu detektierenden Objekt, d. h. der Hand, reflektiert und gelangt nach der Reflexion zu einer Fotodiode. Eine weitere Licht emittierende Diode emittiert ebenfalls rechteckförmiges amplitudenmoduliertes Licht zur Fotodiode, welches jedoch um 180° phasenversetzt ist. Bei der Fotodiode überlagern sich die beiden Lichtsignale und heben sich auf, falls sie genau die gleiche Amplitude aufweisen. Falls sich die Signale bei der Fotodiode nicht aufheben, wird die Lichtemission der zweiten Diode über einen Regelkreis so geregelt, dass sich das Gesamtempfangssignal wieder zu null ergänzt. Ändert sich die Position des Objekts, ändert sich auch der Lichtanteil, welcher von der ersten Licht emittierenden Diode zur Fotodiode über die Reflexion an dem Objekt gelangt. Dies bewirkt ein Nachführen der Intensität der zweiten Licht emittierenden Diode durch den Regelkreis. Das Regelsignal ist somit ein Maß für die Reflexion des Lichts, welches von der ersten Diode emittiert wird, an dem Objekt. Auf diese Weise lässt sich aus dem Regelsignal ein Signal ableiten, welches für die Position des Objekts charakteristisch ist.

Des Weiteren kann die Eingabeeinrichtung eine berührungsempfindliche Folie sein, die z. B. auf dem Display 1 vorgesehen ist. Mit der Folie kann die Position einer Berührung des hinter der Folie angeordneten Displays 1 detektiert werden. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von dem Finger eines Benutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position einem auf dem Display 1 angezeigten graphischen Objekt 6 zugeordnet werden. Des Weiteren können Gleitbewegungen des Fingers über die Folie und Gesten auf der Folie interpretiert werden. Insbesondere kann der Benutzer auf diese Weise eine Linie auf dem Display 1 definieren, indem er an einem Punkt die Folie berührt, zu einem anderen Punkt hin auf der Folie gleitet und den Finger bei dem anderen Punkt von der Folie wegnimmt.

Ferner kann als Eingabeeinrichtung ein abgesetztes Bedienelement eingesetzt werden. Bei dem abgesetzten Bedienelement handelt es sich insbesondere um ein mechanisches Bedienelement. Beispielsweise kann ein Drehschalter vorgesehen sein, durch den auf dem Display 1 angezeigte Schaltflächen graphischer Objekte 6 ansteuerbar und durch Drücken des Drehschalters auswählbar sind. Zusätzlich können um den Drehschalter herum separate Druck- oder Tastschalter angeordnet sein. Die erfindungsgemäße Anzeigeeinrichtung kann beispielsweise eine Multifunktionsbedienvorrichtung umfassen, wie sie in der EP 1 212 208 B1 beschrieben ist.

Gemäß einem weiteren Ausführungsbeispiel umfasst die Eingabeeinrichtung eine drucksensitive Oberfläche, mit welcher die bei der Betätigung der Eingabeeinrichtung ausgeübte Kraft detektiert werden kann. Bei der drucksensitiven Oberfläche kann es sich um ein so genanntes Touchpad handeln. Ferner kann eine Oberfläche eines Bedienelements die drucksensitive Oberfläche umfassen. Schließlich kann das Display 1 die drucksensitive Oberfläche aufweisen, so dass die Eingabeeinrichtung in diesem Fall ein drucksensitiver Touchscreen ist.

Gemäß einer speziellen Ausgestaltung der drucksensitiven Eingabeeinrichtung ist die Oberfläche in Wirkverbindung mit einer ersten Schicht, die eine Vielzahl leitender Spuren aufweist, die auf der Oberfläche der Schicht in einer ersten Richtung ausgerichtet sind. Ferner ist eine zweite Schicht vorgesehen, welche auch eine Vielzahl leitender Spuren aufweist, die in einer zweiten Richtung auf der Oberfläche der zweiten Schicht ausgerichtet sind. Zwischen den beiden Schichten ist eine deformierbare dielektrische Membran angeordnet. Durch die Anordnung der beiden Schichten und der Membran ist es möglich, dass mittels der leitenden Spuren der beiden Schichten ein Kapazitätsabbild gewonnen wird, wenn eine Kraft auf die erste Schicht ausgeübt wird. Dieses Kapazitätsabbild zeigt die Größe der Kraft an, die bei den jeweiligen Positionen auf die Oberfläche ausgeübt wird. Weitere Details und Ausgestaltungen können der EP 1 840 715 A2 entnommen werden, die durch Bezugnahme in die vorliegende Anmeldung aufgenommen wird.

Die drucksensitive Oberfläche der Eingabeeinrichtung umfasst z. B. vier Bedienelemente, welche Pfeile andeuten, die angeben, in welche Richtung in einer auf dem Display 1 dargestellten Liste gescrollt werden soll oder in welche Richtung die von dem Display 1 angezeigte Teilmenge, wie z. B. ein Ausschnitt in einer virtuellen Ebene, verschoben werden soll.

Die Steuereinrichtung 2 ist ferner mit einem Fahrzeugbus 7 gekoppelt. Über den Fahrzeugbus 7 ist die Steuereinrichtung 2 mit Fahrerassistenzsystemen des Fahrzeugs verbunden. Die Steuereinrichtung 2 erhält über den Fahrzeugbus 7 Daten dieser Fahrerassistenzsysteme und bereitet diese so auf, dass diese Daten dem Fahrer bzw. den Fahrzeuginsassen über das Display 1 graphisch dargestellt werden. Die Steuereinrichtung 2 erzeugt hierfür Graphikdaten für auf dem Display 1 darstellbare Objekte 6, welche unter anderem die Informationen der Fahrerassistenzsysteme z. B. anhand von Listen graphisch darstellen. Ferner ist die Steuereinrichtung 2 über den Fahrzeugbus 7 mit verschiedenen Informations- und Kommunikations- sowie Unterhaltungseinrichtungen des Fahrzeugs verbunden. Die vielfältigen Informationen dieser Einrichtungen des Fahrzeugs werden in der Steuereinrichtung 2 aufbereitet und in Grafikdaten für eine grafische Darstellung umgewandelt. Für Animationen der grafischen Darstellung auf dem Display 1 kann die Steuereinrichtung 2 eine Recheneinheit umfassen.

Zum Erzeugen der Graphikdaten, die mittels des Displays 1 angezeigt werden sollen, ist die Steuereinrichtung 2 mit einem Speicher 3 zum Speichern oder Zwischenspeichern von Daten verbunden. Die Daten können eine so genannte Gesamtinformation umfassen, die einem bestimmten Informationsbereich zugeordnet sind. Von dieser Gesamtinformation ist auf dem Display 1 nur eine Teilmenge anzeigbar.

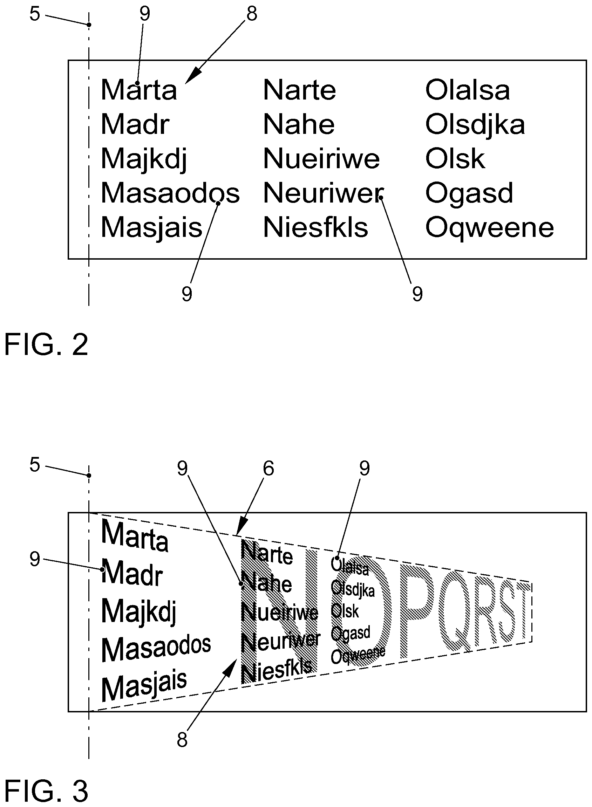

Im Folgenden wird mit Bezug zu den Figuren 2 und 3 ein erstes Ausführungsbeispiel des erfindungsgemäßen Verfahrens erläutert, welches von den vorstehend beschriebenen Vorrichtungen durchgeführt werden kann:
Bei diesem Ausführungsbeispiel ist die Gesamtinformation eine Liste 8 mit einer Vielzahl von Listeneinträgen 9, von denen nur eine Teilmenge angezeigt wird. Die Anzahl der Listeneinträge 9 der angezeigten Teilmenge hängt von der Größe des Displays 1 und dem Vergrößerungsfaktor für die Anzeige der Liste 8 ab. Die Figur 2 zeigt den Fall, bei dem von dem Display 1 insgesamt 15 Listeneinträge 9 der Liste 8 in drei Spalten angezeigt werden. Die angezeigte Teilmenge kann nun durch einen Bedienvorgang eines Nutzers verändert werden. Der Nutzer kann insbesondere einen Bildlauf bzw. ein Scrollen hervorrufen. Dabei werden aufeinanderfolgend Anzeigebilder auf dem Display 1 wiedergegeben, bei denen nacheinander Listeneinträge 9 verschwinden und andere Listeneinträge angezeigt werden. Erzeugt der Nutzer ausgehend von der Anzeige der Figur 2 beispielsweise einen Bildlauf nach rechts, verschwinden zunächst die linken fünf Listeneinträge 9 und nach der dritten Spalte mit Listeneinträgen 9 erscheint eine weitere Spalte mit Listeneinträgen.

Bei dem Bedienvorgang, mit welchem der Nutzer durch die Liste 8 scrollen kann, wird ferner von der Steuereinrichtung 2 ein Steuersignal erzeugt, welches die Darstellung der Liste 8 so verändert, dass sie in die Figur 3 gezeigte zweite Darstellungsart übergeht. Bei dieser zweiten Darstellungsart wird die Liste 8 bzw. das graphische Objekt 6, welches die Liste 8 enthält, relativ zu der in Figur 2 gezeigten ersten Darstellungsart des Objekts 6 bzw. der Liste 8 perspektivisch oder, bei einer autostereoskopischen Anzeige, dreidimensional um die Achse 5 geschwenkt gezeigt. Bei dieser Darstellungsart können mehr Listeneinträge 9 angezeigt werden als dies bei der ersten in Figur 2 gezeigten Darstellungsart möglich ist. Die in der zweiten Darstellungsart von dem Objekt 6 wiedergegebene Teilmenge der Gesamtinformation ist somit größer als die bei der ersten Darstellungsart von dem Objekt 6 wiedergegebene Teilmenge der Gesamtinformation. Wie in Figur 3 gezeigt, wird nicht nur das Objekt 6 selbst perspektivisch bzw. dreidimensional dargestellt, sondern auch die von dem Objekt 6 wiedergegebene Information, d. h. die Liste 8. Da bei der perspektivischen bzw. dreidimensionalen Darstellung weiter hinten liegende Bereiche kleiner dargestellt werden, ergibt sich bei der zweiten Darstellungsart, wie sie in Figur 3 gezeigt ist, Platz, um weitere Informationen, d. h. im vorliegenden Fall weitere Listeneinträge, darzustellen.

Bei dem hier beschriebenen Ausführungsbeispiel ist die Liste 8 hierarchisch strukturiert. In einer hierarchisch höheren Ebene werden nur die Anfangsbuchstaben der Listeneinträge angezeigt, in der nächst niedrigeren Hierarchieebene werden die Listeneinträge 9 selbst angezeigt. Bei der in Figur 3 gezeigten zweiten Darstellungsart werden die perspektivisch bzw. dreidimensional vorderen Bereiche mit einer größeren Detailtiefe dargestellt, d. h. es erfolgt die Anzeige einer niedrigeren Hierarchieebene, und perspektivisch bzw. dreidimensional weiter hinten gelegenen Bereiche werden mit weniger Details dargestellt, d. h. es wird eine höhere Hierarchieebene angezeigt. Im vorliegenden Fall werden für die Anfangsbuchstaben "M", "N" und "O" die Listeneinträge 9 selbst wiedergegeben und für die Anfangsbuchstaben ab "P" werden nur die Anfangsbuchstaben wiedergegeben. Durch diese Anzeige in der zweiten Darstellungsart wird somit eine Vorschau für das Scrollen durch die Liste 8 gegeben.

Dabei werden bei der in Figur 3 gezeigten zweiten Darstellungsart genau die Bereiche mit einer größeren Detailtiefe angezeigt, welche auch bei der ersten in Figur 2 gezeigten Darstellungsart angezeigt werden. Die bei der zweiten Darstellungsart hinzukommenden Bereiche werden somit in einer höheren Hierarchiestufe angezeigt.

Im Folgenden werden verschiedene Bedienvorgänge beschrieben, mit welchen ein Nutzer durch die Liste 8 scrollen kann. Die Bedienvorgänge zeichnen sich jedoch dadurch aus, dass sie gleichzeitig bewirken, dass die Steuereinrichtung 2 ein Steuersignal erzeugt, mit dem das graphische Objekt 6 mit der Liste 8 um die Achse 5 perspektivisch bzw. dreidimensional nach hinten geschwenkt wird und sich damit die vorstehend beschriebene Veränderung der Darstellungsart ergibt.

Handelt es sich bei der Eingabeeinrichtung um eine berührungsempfindliche Oberfläche, d. h. um einen Touchscreen oder ein Touchpad, kann der Bedienvorgang eine so genannte Wischgeste sein, welche der Nutzer mit dem Finger auf der berührungsempfindlichen Oberfläche ausführt. Falls die Eingabeeinrichtung 4 eine Geste, z. B. der Hand des Nutzers, vor dem Display 1 detektieren kann, kann diese Wischgeste auch vor dem Display 1 ausgeführt werden, ohne dass es erforderlich ist, dass der Nutzer das Display 1 berührt. Bei der Bedienbewegung, die der Nutzer bei der Wischgeste ausführt, wird die Geschwindigkeit der Bedienbewegung detektiert. Die Geschwindigkeit des in der Liste 8 erzeugten Bildlaufs wird dann in Abhängigkeit von der Geschwindigkeit der Bedienbewegung erzeugt. Durch eine schnell ausgeführte Wischgeste wird ein schneller Bildlauf in der Liste 8 hervorgerufen, durch eine langsam ausgeführte Wischgeste wird ein langsamer Bildlauf durch die Liste 8 hervorgerufen. Gleichzeitig wird das Objekt 6 bei der Wischgeste um die Achse 5 perspektivisch bzw. dreidimensional nach hinten geschwenkt. Diese Schwenkbewegung wird als Animation dargestellt, wobei diese Animation so umgesetzt wird, als ob es sich bei dem Objekt 6 um einen realen Gegenstand handelte, der eine Trägheit besitzt. Bei der Bewegung des Objekts 6 zeigt sich somit ein Beschleunigungs- und Verzögerungsverhalten, wie man es von realen Objekten mit einer Trägheit erwarten würde. Beispielsweise kann das Objekt 6 bei der Animation nicht direkt in die in Figur 3 gezeigte Einstellung übergehen, sondern eine Schwingbewegung ausführen, bevor es den endgültigen Zustand erreicht.

Des Weiteren hängt der Schwenkwinkel, um welchen das graphische Objekt 6 geschwenkt wird, von der Geschwindigkeit des Bedienvorgangs ab. Eine schnell ausgeführte Wischgeste führt dazu, dass das Objekt 6 um einen größeren Schwenkwinkel geschwenkt wird als dies der Fall ist, wenn die Wischgeste langsamer ausgeführt wird. Der Schwenkwinkel übersteigt jedoch nicht einen maximalen Schwenkwinkel, der z. B. in einem Bereich zwischen 35° und 55° liegt. Der maximale Schwenkwinkel ist insbesondere 45°.

Durch die Wischgeste kann der Nutzer somit durch die Liste 8 scrollen, wobei gleichzeitig durch das Schwenken des graphischen Objekts 6, welches die Liste 8 enthält, eine größere Vorschau auf entfernte Listeneinträge 9 gegeben wird. Verlangsamt der Nutzer seine Wischgeste zum Scrollen durch die Liste 8, wird das graphische Objekt 6 mit der Liste 8 wieder in Richtung der in Figur 2 gezeigten Darstellungsart, welche eine Aufsicht auf das graphische Objekt 6 zeigt, geschwenkt. Wird der Bedienvorgang, d. h. die Wischgeste beendet, kehrt die Darstellung des graphischen Objekts 6 wieder in den in Figur 2 gezeigten Ausgangszustand zurück, wobei jedoch nach dem Scrollen eine andere Teilmenge der Gesamtliste 8 angezeigt wird. Der Nutzer kann nun beispielsweise einen Listeneintrag 9 über die Eingabeeinrichtung 4 auswählen, indem er z. B. die berührungsempfindliche Oberfläche des Displays 1 bei dem entsprechenden Listeneintrag 9 antippt.

Falls der Bedienvorgang über eine andere Eingabeeinrichtung, wie z. B. ein abgesetztes Bedienelement mit Dreh-, Druck- oder Tastschaltern oder ein drucksensitives Bedienelement ausgeführt wird, wird der Drehwinkel eines Drehstellers, die Dauer der Betätigung eines Druck- oder Tastschalters sowie gegebenenfalls die Größe der auf eine drucksensitive Oberfläche ausgeübte Kraft erfasst und in ein Steuersignal für den Bildlauf durch die Liste 8 sowie für das Schwenken des graphischen Objekts 6 umgesetzt.

### BEZUGSZEICHENLISTE

- 1: Display
- 2: Steuereinrichtung
- 3: Speicher
- 4: Eingabeeinrichtung
- 5: Schwenkachse
- 6: graphisches Objekt
- 7: Fahrzeugbus
- 8: Liste
- 9: Listeneinträge

## Patentansprüche

1. Verfahren zum Anzeigen von Informationen, insbesondere in einem Fahrzeug, bei dem
- zumindest ein Objekt (6) zur Wiedergabe einer Teilmenge einer Gesamtinformation in zumindest einer ersten Darstellungsart mittels eines Displays (1) graphisch dargestellt wird und
- in Abhängigkeit von einem Steuersignal von einer Steuereinrichtung (2) Graphikdaten erzeugt werden, welche die Darstellung des graphischen Objekts (6) so verändern, dass das graphische Objekt (6) in zumindest eine zweite Darstellungsart übergeht,
**dadurch gekennzeichnet,**
- **dass** bei der zweiten Darstellungsart das Objekt (6) perspektivisch oder dreidimensional relativ zur ersten Darstellungsart des Objekts (6) um eine Achse (5) geschwenkt gezeigt wird, so dass sich zwar die von dem Objekt (6) eingenommene Fläche auf dem Display (1) verkleinert, die Teile des Objekts (6), die perspektivisch hinten dargestellt werden, sich jedoch hinsichtlich ihrer absoluten Größe auf dem Display (1) verkleinern, und
- **dass** bei der zweiten Darstellungsart die von dem Objekt (6) wiedergegebene Teilmenge der Gesamtinformation größer ist als die bei der ersten Darstellungsart von dem Objekt (6) wiedergegebene Teilmenge der Gesamtinformation.

2. Verfahren nach Anspruch 1,
**dadurch gekennzeichnet,**
**dass** die Steuereinrichtung (2) die Graphikdaten so verändert, dass die Teilmenge bei der zweiten Darstellungsart perspektivisch oder dreidimensional dargestellt wird, wobei die Art der perspektivischen Darstellung oder dreidimensionalen Darstellung von dem Schwenkwinkel abhängt.

3. Verfahren nach Anspruch 2,
**dadurch gekennzeichnet,**
**dass** die Größe der von dem graphischen Objekt (6) wiedergegebenen Teilmenge von dem Schwenkwinkel abhängt, mit dem das graphische Objekt (6) geschwenkt ist.

4. Verfahren nach einem der vorstehenden Ansprüche,
**dadurch gekennzeichnet,**
**dass** die Steuereinrichtung (2) die Graphikdaten so verändert, dass bei der zweiten Darstellungsart die perspektivisch oder dreidimensional vorne angezeigte Information mit einer größeren Detailtiefe wiedergegeben wird als die perspektivisch hinten angezeigte Information

5. Verfahren nach einem der vorstehenden Ansprüche,
**dadurch gekennzeichnet,**
**dass** das Steuersignal durch einen Bedienvorgang eines Nutzers erzeugt wird und dass durch den Bedienvorgang ferner die angezeigte Teilmenge der Gesamtinformation verändert wird.

6. Verfahren nach einem der vorstehenden Ansprüche,
**dadurch gekennzeichnet,**
**dass** die Gesamtinformation eine Liste (8) mit einer Vielzahl von Listeneinträgen (9) ist, von denen nur eine Teilmenge angezeigt wird, und dass die Anzahl der Listeneinträge (9) der Teilmenge von dem Schwenkwinkel abhängt.

7. Verfahren nach einem der Ansprüche 5 oder 6,
**dadurch gekennzeichnet,**
**dass** bei Beendigung des Bedienvorgangs der Schwenkwinkel wieder auf den ursprünglichen Wert zurückgesetzt wird, bei dem das Objekt (6) die Teilmenge der Gesamtinformation in der ersten Darstellungsart wiedergibt.

8. Verfahren nach einem der Ansprüche 5 bis 7,
**dadurch gekennzeichnet,**
**dass** bei dem Bedienvorgang eine Bedienbewegung ausgeführt wird, deren Geschwindigkeit erfasst wird, und dass der Schwenkwinkel und/oder die Geschwindigkeit der Veränderung der angezeigten Teilmenge der Gesamtinformation von der Geschwindigkeit der Bedienbewegung abhängt.

9. Verfahren nach einem der Ansprüche 5 bis 7,
**dadurch gekennzeichnet,**
**dass** für den Bedienvorgang eine Bediendauer definiert wird, die erfasst wird, und dass der Schwenkwinkel und/oder die Geschwindigkeit der Veränderung der angezeigten Teilmenge der Gesamtinformation von der Bediendauer abhängt.

10. Verfahren nach einem der Ansprüche 5 bis 7,
**dadurch gekennzeichnet,**
**dass** bei dem Bedienvorgang eine vom Nutzer ausgeübte Kraft detektiert wird und dass der Schwenkwinkel und/oder die Geschwindigkeit der Veränderung der angezeigten Teilmenge der Gesamtinformation von der beim Bedienvorgang vom Nutzer ausgeübten Kraft abhängt.

11. Anzeigeeinrichtung, insbesondere für ein Fahrzeug, mit
- einem Display (1) zur graphischen Darstellung von Informationen,
- einem Speicher (3) zum Speichern einer Gesamtinformation,
- einer Steuereinrichtung (2), mit welcher Graphikdaten erzeugbar sind, die zumindest ein auf dem Display (1) darstellbares graphisches Objekt (6) in einer ersten Darstellungsart wiedergeben, bei welcher eine Teilmenge der in dem Speicher (3) gespeicherten Gesamtinformation dargestellt wird, und
- einer Eingabeeinrichtung (4) zum Erzeugen eines Steuersignals durch einen Bedienvorgang,
**dadurch gekennzeichnet,**
- **dass** von der Steuereinrichtung (2) die Graphikdaten so veränderbar sind, dass das graphische Objekt (6) in zumindest eine zweite Darstellungsart übergeht, bei der das Objekt (6) perspektivisch oder dreidimensional relativ zur ersten Darstellungsart des Objekts (6) um eine Achse (5) geschwenkt gezeigt ist, so dass sich zwar die von dem Objekt (6) eingenommene Fläche auf dem Display (1) verkleinert, die Teile des Objekts (6), die perspektivisch hinten dargestellt werden, sich jedoch hinsichtlich ihrer absoluten Größe auf dem Display (1) verkleinern, und
- in der zweiten Darstellungsart die von dem Objekt (6) wiedergegebene Teilmenge der Gesamtinformation größer ist als die bei der ersten Darstellungsart von dem Objekt (6) wiedergegebene Teilmenge der Gesamtinformation.

12. Anzeigeeinrichtung nach Anspruch 11,
**dadurch gekennzeichnet,**
**dass** die Gesamtinformation eine Liste (8) mit einer Vielzahl von Listeneinträgen (9) ist, von denen nur eine Teilmenge anzeigbar ist, wobei die Anzahl der Listeneinträge (9) der Teilmenge von dem Schwenkwinkel abhängt.

13. Anzeigeeinrichtung nach Anspruch 11 oder 12,
**dadurch gekennzeichnet,**
**dass** die Eingabeeinrichtung eine berührungsempfindliche Oberfläche umfasst.

14. Anzeigeeinrichtung nach einem der Ansprüche 11 bis 13,
**dadurch gekennzeichnet,**
**dass** die Eingabeeinrichtung drucksensitiv ist, so dass die bei der Betätigung der Eingabeeinrichtung ausgeübte Kraft detektierbar ist.

## Claims

1. Method for displaying information, particularly in a vehicle, in which,
- at least one object (6) for reproducing a subset of a piece of overall information is graphically represented in at least one first type of representation by means of a display (1), and
- a control signal from a control device (2) is taken as a basis for generating graphics data that alter the representation of the graphical object (6) such that the graphical object (6) changes to at least one second type of representation,
**characterized**
- **in that** for the second type of representation, the object (6) is shown in perspective or three-dimensionally relative to the first type of presentation of the object (6) in a manner swivelled about an axis (5), so that although the area taken up by the object (6) on the display (1) is reduced, the portions of the object (6) that are represented at the back in perspective have their absolute size on the display (1) reduced, and
- **in that** for the second type of representation, the subset that the object (6) reproduces for the overall information is larger than the subset that the object (6) reproduces for the overall information in the first type of representation.

2. Method according to Claim 1,
**characterized**
**in that** the control device (2) alters the graphics data such that the subset is represented in perspective or three-dimensionally in the case of the second type of representation, the type of the perspective representation or three-dimensional representation being dependent on the swivel angle.

3. Method according to Claim 2,
**characterized**
**in that** the size of the subset reproduced by the graphical object (6) is dependent on the swivel angle through which the graphical object (6) is swivelled.

4. Method according to one of the preceding claims,
**characterized**
**in that** the control device (2) alters the graphics data such that for the second type of representation, the information displayed at the front in perspective or three-dimensionally is reproduced with a greater depth of detail than the information displayed at the back in perspective.

5. Method according to one of the preceding claims,
**characterized**
**in that** the control signal is generated by an operator control process by a user and in that the operator control process further alters the displayed subset of the overall information.

6. Method according to one of the preceding claims,
**characterized**
**in that** the overall information is a list (8) having a multiplicity of list entries (9), of which only a subset is displayed, and in that the number of list entries (9) in the subset is dependent on the swivel angle.

7. Method according to either of Claims 5 and 6,
**characterized**
**in that** on termination of the operator control process, the swivel angle is reset to the original value again at which the object (6) reproduces the subset of the overall information in the first type of representation.

8. Method according to one of Claims 5 to 7,
**characterized**
**in that** the operator control process involves an operator control movement being executed whose speed is sensed, and in that the swivel angle and/or the speed of alteration of the displayed subset of the overall information is/are dependent on the speed of the operator control movement.

9. Method according to one of Claims 5 to 7,
**characterized**
**in that** an operator control period is defined for the operator control process and is recorded, and in that the swivel angle and/or the speed of alteration of the displayed subset of the overall information is/are dependent on the operator control period.

10. Method according to one of Claims 5 to 7,
**characterized**
**in that** a force exerted by the user is detected for the operator control process and in that the swivel angle and/or the speed of alteration of the displayed subset of the overall information is/are dependent on the force exerted by the user for the operator control process.

11. Display device, particularly for a vehicle, having
- a display (1) for graphically representing information,
- a memory (3) for storing a piece of overall information,
- a control device (2) that can be used to generate graphics data that reproduce at least one graphical object (6), which is representable on the display (1), in a first type of representation, in which a subset of the overall information stored in the memory (3) is represented, and
- an input device (4) for generating a control signal by means of an operator control process,
**characterized**
- **in that** the control device (2) can alter the graphics data such that the graphical object (6) changes to at least one second type of representation, for which the object (6) is shown in perspective or three-dimensionally relative to the first type of representation for the object (6) in a manner swivelled about an axis (5), so that although the area taken up by the object (6) on the display (1) is reduced, the portions of the object (6) that are represented at the back in perspective have their absolute size on the display (1) reduced, and
- in the second type of representation, the subset that the object (6) reproduces for the overall information is larger than the subset that the object (6) reproduces for the overall information in the first type of representation.

12. Display device according to Claim 11,
**characterized**
**in that** the overall information is a list (8) having a multiplicity of list entries (9), of which only a subset is displayable, wherein the number of list entries (9) in the subset is dependent on the swivel angle.

13. Display device according to Claim 11 or 12,
**characterized**
**in that** the input device comprises a touch-sensitive surface.

14. Display device according to one of Claims 11 to 13,
**characterized**
**in that** the input device is pressure-sensitive, so that the force exerted when the input device is operated is detectable.

## Revendications

1. Procédé d'affichage d'informations, notamment dans un véhicule, dans lequel
- au moins un objet (6), pour la reproduction d'une partie d'une information globale, est représenté graphiquement sous au moins une première forme de représentation, au moyen d'un affichage (1), et
- en fonction d'un signal de commande envoyé par un dispositif de commande (2), des données graphiques sont générées, les données modifiant la représentation de l'objet graphique (6) de manière à ce que l'objet graphique (6) prenne au moins une deuxième forme de représentation,
**caractérisé**
- **en ce que**, dans la deuxième forme de représentation, l'objet (6) est affiché en perspective ou en trois dimensions de manière pivotée autour d'un axe (5), par rapport à la première forme de représentation de l'objet (6), de manière à ce que, bien que la surface occupée par l'objet (6) sur l'affichage (1) se réduise, les parties de l'objet (6) qui sont représentées à l'arrière en perspective se réduisent cependant en ce qui concerne leur taille absolue sur l'affichage (1), et
- **en ce que**, dans la deuxième forme de représentation, le sous-ensemble de l'information commune reproduite par l'objet (6) est plus important que le sous-ensemble de l'information globale reproduite dans la première forme de représentation par l'objet (6).

2. Procédé selon la revendication 1, **caractérisé en ce que** le dispositif de commande (2) modifie les données graphiques de manière à ce que le sous-ensemble soit représenté en perspective ou en trois dimensions dans la deuxième forme de réalisation, dans lequel la forme de représentation en perspective ou de représentation en trois dimensions dépend de l'angle de pivotement.

3. Procédé selon la revendication 2,
**caractérisé en ce que** la taille du sous-ensemble reproduit par l'objet graphique (6) dépend de l'angle de pivotement selon lequel l'objet graphique (6) est amené à pivoter.

4. Procédé selon l'une quelconque des revendications précédentes, **caractérisé en ce que** le dispositif de commande (2) modifie les données graphiques de manière à ce que, dans la deuxième forme de représentation, l'information affichée à l'avant en perspective ou en trois dimensions est reproduite avec une profondeur de détail plus importante que l'information affichée à l'arrière en perspective.

5. Procédé selon l'une quelconque des revendications précédentes,
**caractérisé en ce que** le signal de commande est généré par une action de commande d'un utilisateur et **en ce que** le sous-ensemble affiché de l'information globale est en outre modifié par l'action de commande.

6. Procédé selon l'une quelconque des revendications précédentes,
**caractérisé en ce que** l'information globale est une liste (8) contenant une pluralité d'entrées de liste (9), dont seul un sous-ensemble est affiché, et **en ce que** le nombre d'entrées de liste (9) du sous-ensemble dépend de l'angle de pivotement.

7. Procédé selon l'une quelconque des revendications 5 ou 6,
**caractérisé en ce que**, à la fin de l'action de commande, l'angle de pivotement est réinitialisé à la valeur initiale pour laquelle l'objet (6) reproduit le sous-ensemble de l'information globale dans le premier mode de représentation.

8. Procédé selon l'une quelconque des revendications 5 à 7,
**caractérisé en ce que**, lors de l'action de commande, un mouvement de commande est exécuté, mouvement dont la vitesse est détectée, et **en ce que** l'angle de pivotement et/ou la vitesse de modification du sous-ensemble affiché de l'information globale dépend de la vitesse du mouvement de commande.

9. Procédé selon l'une quelconque des revendications 5 à 7,
**caractérisé en ce que**, pour l'action de commande, une durée de commande est définie, laquelle durée est détectée, et **en ce que** l'angle de pivotement et/ou la vitesse de modification du sous-ensemble affiché de l'information globale dépend de la durée de commande.

10. Procédé selon l'une quelconque des revendications 5 à 7,
**caractérisé en ce que**, lors de l'action de commande, une force exercée par un utilisateur est détectée et **en ce que** l'angle de pivotement et/ou la vitesse de modification du sous-ensemble affiché de l'information globale dépend de la force exercée par l'utilisateur lors de l'action de commande.

11. Dispositif d'affichage, notamment pour un véhicule, comportant
- un affichage (1) destiné à représenter graphiquement des informations,
- une mémoire (3) destinée à stocker une information globale,
- un dispositif de commande (2) au moyen duquel des données graphiques peuvent être générées, lesquelles données graphiques représentent un objet graphique (6) pouvant être représenté sur l'affichage (1) dans une première forme de représentation dans laquelle un sous-ensemble de l'information globale stockée dans la mémoire (3) est représenté, et
- un dispositif d'entrée (4) destiné à générer un signal de commande par une action de commande, **caractérisé**
- **en ce que** les données graphiques sont modifiées par le dispositif de commande (2) de manière à ce que l'objet graphique (6) prenne au moins une deuxième forme de représentation dans laquelle l'objet (6) est représenté en perspective ou en trois dimensions, par rapport à la première forme de représentation de l'objet (6) amené à pivoter autour d'un axe (5), de manière à ce que, bien que la surface occupée par l'objet (6) sur l'affichage (1) se réduise, les parties de l'objet (6) qui sont représentées en perspective à l'arrière se réduisent cependant en ce qui concerne leur taille absolue sur l'affichage (1), et
- dans la deuxième forme de représentation, le sous-ensemble de l'information globale reproduit par l'objet (6) est plus important que le sous-ensemble de l'information globale reproduit dans la première forme de réalisation par l'objet (6).

12. Dispositif d'affichage selon la revendication 11,
**caractérisé en ce que** l'information globale est une liste (8) comportant une pluralité d'entrées de liste (9), dont seul un sous-ensemble peut être représenté, dans lequel le nombre des entrées de liste (9) du sous-ensemble dépend de l'angle de pivotement.

13. Dispositif d'affichage selon la revendication 11 ou 12,
**caractérisé en ce que** le dispositif d'entrée comprend une surface tactile.

14. Dispositif d'affichage selon l'une quelconque des revendications 11 à 13,
**caractérisé en ce que** le dispositif d'entrée est sensible à la pression, de manière à ce que la force exercée lors de l'actionnement du dispositif d'entrée puisse être détectée.
